# EUROPÄISCHE PATENTSCHRIFT

(11) **EP 1 101 084 B1**
(45) Veröffentlichungstag und Bekanntmachung des Hinweises auf die Patenterteilung: **09.10.2002**
(21) Anmeldenummer: 99939390.3
(22) Anmeldetag: 21.07.1999
(51) Int. Cl.: G01J 3/51, G01N 21/25, G01N 21/47

(54) **VORRICHTUNG ZUR SPEKTRALMESSUNG VON OBJEKTEN**
DEVICE FOR THE SPECTRAL MEASUREMENT OF OBJECTS
DISPOSITIF DESTINE A LA MESURE SPECTRALE D'OBJETS

(30) Priorität: 24.07.1998 DE 19835094
(43) Veröffentlichungstag der Anmeldung: 23.05.2001
(73) Patentinhaber: INSTITUT FUR CHEMO- UND BIOSENSORIK Münster E.V., 48149 Münster (DE)
(72) Erfinder: HUTH-FEHRE, Thomas, D-48341 Altenberge (DE); KOWOL, Frank, D-48151 Münster (DE); FREITAG, Holger, D-48149 Münster (DE); KATERKAMP, Andreas, D-48149 Münster (DE)
(74) Vertreter: Pfenning, Meinig & Partner
(86) Internationale Anmeldenummer: EP9905199
(87) Internationale Veröffentlichungsnummer: WO00005556

(56) Entgegenhaltungen:
- WO-A-96/13709
- DE-A- 3 421 577
- DE-A- 19 706 050
- US-A- 4 519 707
- US-A- 4 678 332
- US-A- 4 896 965

## Beschreibung

Die Erfindung betrifft eine Vorrichtung zur Spektralmessung von Objekten nach dem Oberbegriff des Anspruchs 1.

Um zum Beispiel an schnell bewegten Objekten präzise Spektralmessungen vornehmen zu können, müssen alle Wellenlängen simultan detektiert werden und zugleich muß sichergestellt werden, daß alle Detektoren Licht aus dem gleichen Raumgebiet angeboten bekommen, da sonst räumliche Helligkeitsunterschiede als Wellenlängeninformation mißinterpretiert werden.

Für preisgünstige Linienspektrometer sind zwei Bauweisen zur zeitgleichen Erfassung diskreter Wellenlängen üblich. Bei der ersten Variante wird mittels eines Beugungsgitters eine Dispersion erzeugt. Das Gitter zerlegt das Infrarotlicht in seine spektralen Anteile. Diese werden mit Hilfe eines Diodenarrays oder einzelner Photodioden detektiert. Mit dieser Anordnung ist sichergestellt, daß alle Photodioden das gleiche Objekt detektieren und sich das auftreffende Licht nur in seinen spektralen Eigenschaften unterscheidet. Die Nachteile dieser Anordnung sind der vergleichsweise hohe Preis für ein Beugungsgitter und der große Aufwand für die Justage.

Die zweite Variante verwendet Strahlteiler, um zu gewährleisten, daß alle Detektoren Licht des gleichen Ortes detektieren. Die Strahlteiler teilen das vom Objekt reflektierte bzw. transmittierte Licht in mehrere Strahlen gleicher Intensität auf. Mit Hilfe von Interferenzfiltern können die spektralen Eigenschaften des Objekts bestimmt werden. Wie beim Beugungsgitter wird bei diesem Aufbau die Ortsauflösung vollständig beseitigt, das heißt jeder Detektor wird von Licht, das vom selben Ort kommt, bestrahlt. Auch diese Methode ist recht kostenaufwendig, da die Strahlteiler vergleichsweise teuer sind. Als Nachteil kommt hinzu, daß die Optik sehr große Ausmaße annimmt und es schwieriger ist, eine große Optik mechanisch stabil zu bauen.

WO 96/13709 offenbart ein Farbmeßgerät, bei dem eine auf ein Objekt gerichtete und von dem Objekt reflektierte Strahlung über eine Linse einem Lichtleiter und danach zur spektralen Zerlegung einer mehrere Filter aufweisende Filter- und Empfängeranordnung zugeführt wird. Als Lichtleiter wird ein Faserbündel verwendet, daß in einem Verzweigungsteil in kleinere Bündel aufgeteilt wird, denen jeweils ein Filter und ein Detektor zugeordnet sind.

US 4 896 965 beschreibt eine Vorrichtung zur Spektralmessung einer Flamme, bei der eine vor einem sich verzweigenden Faserbündel angeordnete Streuscheibe die Gleichmäßigkeit am Einstrahlungsende des Faserbündels verbessert.

Aus der DE 34 21 577 ist ein Gerät zur Reflexionsmessung an farbigen Objekten bekannt, bei dem als Lichtführungselement ein monomassiver Lichtleiter aus Glas- oder Kunststoffstäben verwendet wird.

Der Erfindung liegt die Aufgabe zugrunde, eine Vorrichtung zur Spektralmessung von Objekten zu messen, die in der Lage sind, zeitgleich Intensitäten bei mehreren Wellenlängen von Licht bzw. von der Strahlung eines Ortes zu messen, wobei die Vorrichtung kostengünstig, leicht zu montieren und massenprodukti onstauglich sein soll und eine effektive Strahlungsausnutzung gewährleisten soll.

Diese Aufgabe wird erfindungsgemäß durch die kennzeichnenden Merkmale des Anspruchs 1 in Verbindung mit den Merkmalen des Oberbegriffs gelöst.

Dadurch, daß bei der erfindungsgemäßen Vorrichtung die reflektierte bzw. transmittierte Strahlung unscharf, das heißt durch eine unscharfe Abbildung in den Lichtleiter eingekoppelt wird und diese unscharfe Abbildung in den Lichtleiter mit der durch Mischung in dem Lichtleiter kombiniert wird, wird die Ortsauflösung verwischt. Dafür werden aber keine teueren optischen Bauelemente, wie Beugungsgitter benötigt. Durch die Verwendung des strahlugnsführenden Blocks, der sich verzweigt, wird eine effektivere Licht- oder Strahlungsausnutzung erzielt. Aufgrund des erfindungsgemäßen Aufbaus können kleine Abmessungen gewählt werden und die Montage ist relativ leicht. Dadurch kann die erfindungsgemäße Vorrichtung als Massenprodukt dienen.

Die Ausgestaltung als optischer Verzweiger erlaubt eine räumlich flexible Positionierung der Verzweigungsenden mitsamt Detektoren.

Durch die in den abhängigen Ansprüchen angegebenen Maßnahmen sind vorteilhafte Weiterbildungen und Verbesserungen möglich.

Die Durchmischung der Strahlung in dem Lichtleiter, der als Glasfaser oder Glasfaserbündel ausgebildet sein kann, wird weiter verbessert, wenn die Länge des Lichtleiters ausreichend gewählt wird und/oder der Lichtleiter ein- oder mehrfach gebogen wird. Eine weitere Verbesserung für eine vollständige Auslösung der Ortsinformation liegt in der Verwendung einer Streuscheibe oder einem diffraktiven optischen Bauelement hinter der Faser bzw. dem Lichtleiter, wobei vorteilhafterweise ein Transmissionsbeugungsgitter als diffraktives optisches Bauelement verwendet werden kann.

Vorzugsweise sind Streuscheibe/diffraktives optisches Bauelement, strahlungsführender Block und Filter sowie Detektoren an einem Spritzgußteil zur Ausbildung einer Einheit befestigt.

Ein Ausführungsbeispiel der Erfindung ist in der Zeichnung dargestellt und wird in der nachfolgenden Beschreibung näher erläutert. Es zeigen:
- Fig. 1: eine schematische Ansicht eines Grundaufbaus einer Vorrichtung, wie sie teilweise bei der Erfindung verwendet wird,
- Fig. 2: eine Vorderansicht der in Fig. 1 verwendeten Empfängeranordnung,
- Fig. 3: eine Prinzipdarstellung einer Einkoppeloptik, wie sie bei einem Ausführungsbeispiel der Erfindung verwendet wird,
- Fig. 4: die Einkoppeloptik nach Fig. 3 als eine Einheit.

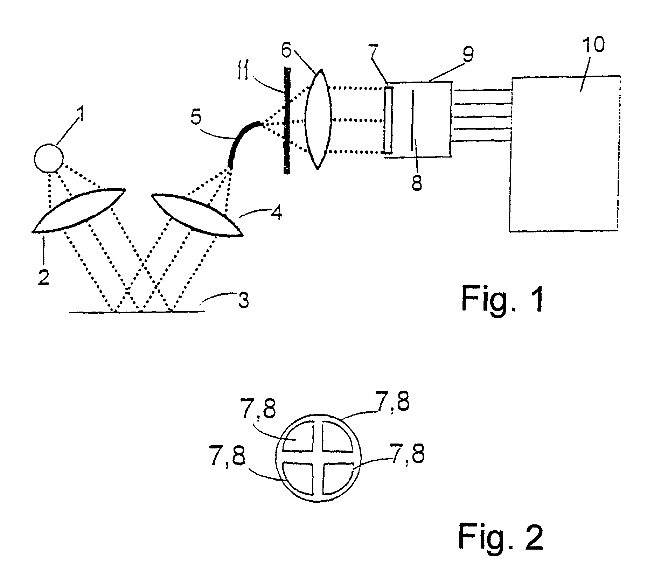

Die in Fig. 1 dargestellte Vorrichtung weist eine Lichtquelle 1 auf, die als Halogenlampe mit einem sehr breiten Spektrum ausgebildet ist. Das von der Halogenlampe 1 ausgesandte Licht wird durch eine Linse 2 in ein paralleles Strahlenbündel umgewandelt, das ein schematisch dargestelltes Objekt 3 bestrahlt. Dieses Objekt 3 bewegt sich schnell an der Bestrahlungsstelle vorbei, so daß eine schnelle Spektralmessung aller Wellenlängen bzw. aller gewünschten Wellenlängen simultan vorgenommenn werden muß.

Das vom Objekt 3 reflektierte Licht wird mit einer Konvexlinse 4 gesammelt und in ein Faserbündel eingekoppelt. In der dargestellten Vorrichtung wird das aus dem Faserbündel 5 austretende Licht mit Hilfe einer Konvexlinse, die nicht Bestandteil der Erfindung ist, 6 parallel gemacht und auf eine Interferenzfilteranordnung 7 gegeben. Die Umwandlung in parallele Strahlen durch die Konvexlinse 6 ist aber nur dann von Bedeutung, wenn schmalbandige Interferenzfilter verwendet werden. Der Filteranordnung 7 ist eine Empfängeranordnung nachgeschaltet, die im vorliegenden Fall als Photodiode ausgebildet ist, und vier verschiedene Interferenzfilter 7 aufweist, wobei entsprechend diesen vier verschiedenen Interferenzfiltern eine Quadrantenphotodiode 9 als Empfängeranordnung verwendet wird, wobei entsprechend Fig. 2 vorzugsweise die Interferenzfilter 7 direkt auf das Fenster der Quadrantenphotodiode 9 aufgebracht sind. Die vier Detektoren der Quadrantenphotodiode 9 detektieren die Intensitäten der vier Wellenlängen und geben diese Signale an
eine Verstärkerelektronik 10 weiter. Die Interferenzfilter können auch direkt auf die Photodiode aufgebracht sein.

Da alle Detektoren der Quadrantenphotodiode 9 die Strahlung aus jeweils dem gleichen Raumgebiet angeboten bekommen müssen, darf auf der Quadrantenphotodiode keine örtliche Zuordnung zu dem Objekt 3 vorhanden sein, daß heißt für eine optimale Funktion der gesamten Vorrichtung muß die Ortsinformation eines in die Glasfaser 5 eingekoppelten Lichtstrahls zerstört werden. Dies wird dadurch erreicht, daß die von dem Objekt 3 reflektierte Strahlung durch die Konvexlinse 4 unscharf in das Faserbündel eingekoppelt wird, das heißt die Bildebene stimmt nicht mit der Endfläche der Faser überein. Durch die unscharfe Abbildung in das Faserbündel 5 wird die Ortsauflösung hinsichtlich des Objektes zumindest zum Teil verwischt.

Der Informationsgehalt einer Glasfaser spiegelt sich in Intensitätsanisotropien innerhalb des Azimutwinkels wider. Da ein Lichtstrahl in einem Glasfaserkabel sehr häufig an der Übergangszone zwischen seinem reflektierenden Mantel (cladding) und dem Glasfaserkern (core) gebrochen wird, verliert er bei ausreichend langem Kabel bereits auf natürliche Weise Anisotropien im Azimutwinkel. Ab einer gewissen Länge (z.B. 20 cm) wird eine relativ homogene Verteilung der Intensität erhalten, die durch Biegen oder Aufwickeln der Faser verstärkt wird.

Bei einer optimalen Durchmischung des Azimutwinkels wird das Licht entsprechend einer Cosinusquadrat-Abstrahlcharakteristik abgestrahlt. Entsprechend einem Ausführungsbeispiel der Erfindung wird diese Abstrahlcharakteristik durch zwei enge Schlaufen der Lichtleitfaser 5 herbeigeführt, wobei die Schlaufenebenen senkrecht zueinander stehen. In diesen Schlaufen wird das Licht sehr häufig in dem Faserbündel hin- und herreflektiert, so daß eine gleichmäßige Durchmischung stattfinden kann. Selbstverständlich können die Fasern auch auf andere Art und Weise gebogen werden oder aber zusätzlich verdrillt werden, um eine Durchmischung der Strahlung zu erreichen. Auf diese Weise wird die Ortsauflösung der Anordnung aufgehoben.

Es kann aber sein, daß die angestrebte Durchmischung bzw. Ortsauflösung noch nicht mit ausreichender Qualität erreicht wird. Daher wird zusätzlich eine Streuscheibe 11 zwischen Glasfaser 5 und Detektoranordnung. Die Streuscheibe kann stark angerauht sein, wobei die mittlere Rauhigkeit größer als die zu untersuchende Wellenlänge sein muß. Durch diese Maßnahme läßt sich gewährleisten, daß eine isotrope Verteilung der Lichtintensität erreicht wird. Selbstverständlich kann die Streuscheibe auch anders ausgebildet sein, wesentlich ist, daß die erwähnte isotrope Verteilung der Lichtintensität erzielt wird.

Wie aus Fig. 2 zu erkennen ist, sind die Interferenzfilter als vier Segmente ausgebildet, die jeweils vier Detektoren der Photodiode 9 zugeordnet sind. Selbstverständlich sind andere Formen der Interferenzfilter und der Empfänger sowie eine unterschiedliche Anordnung derselben denkbar.

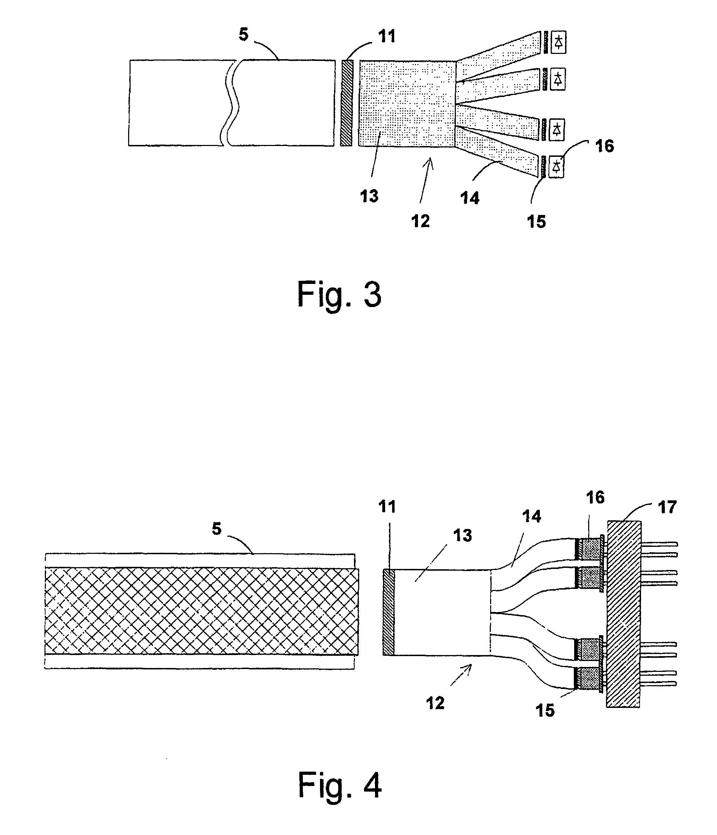

In Fig. 3 ist eine Einkoppeloptik dargestellt, wie sie anstelle der Linse 6 bei der vorliegenden Erfindung verwendet wird. Dabei ist hinter der Streuscheibe 11 ein strahlungsführender Block aus Glas oder Kunststoff dargestellt, der aus einem kompakten Teil 13 und einem verzweigten Teil mit Verzweigungsarmen 14 besteht. In unmittelbarer Nähe der Enden der Verzweigungsarme 14 sind Filter 15 und dahinter Detektoren 16 angeordnet, die aufgeklebt sein können. Die Filter können direkt auf die Detektoren aufgedampft sein. Der lichtführende Block zerstört noch weiter die Ortsauflösung, so daß auf jedem Detektor die gleiche Strahlungsinformation enthalten ist.

Eine weitere Verbesserung der Lichtausnutzung kann gewährleistet werden, wenn die Streuscheibe 11 durch ein diffraktives optisches Bauelement wie zum Beispiel ein Transmissionsbeugungsgitter mit kreuzweiser Strichanordnung als Streuelement ersetzt wird. Dabei kann ein kostengünstiges Gitter verwendet werden, da die Genauigkeit nicht so hoch sein muß. Die bei einer Streuscheibe auftretenden Lichtverluste durch Rückreflexion werden so vermieden.

In Fig. 4 ist die Einkoppeloptik nach Fig. 3 als monolithischer Block dargestellt. Dabei ist der strahlungsführende Block 12 als Spritzgußteil ausgebildet, wobei die Verzweigungsarme 14 Bestandteile des Spritzgußteils sind oder aufgeklebt sind. Die Streuscheibe 11 bzw. das diffraktive optische Bauelement ist auf die den Verzweigungsarmen 14 gegenüberliegenden Stirnfläche aufgeklebt oder die Stirnfläche selbst ist als Streuscheibe oder diffraktives optisches Bauelement ausgebildet. Detektoren 16 mit aufgedampften Interferenzfiltern 15 sind mit den Enden der Verzweigungsarme zum Beispiel durch Kleben fest verbunden. Mit 17 ist eine Aufnahmeplatte für das Spritzgußteil mit Detektoren bezeichnet.

In dem Ausführungsbeispiel wird eine Halogenlampe als Strahlungsquelle verwendet. Es können auch andere Strahlungsquellen mit breitbandiger Abstrahlcharakteristik vorgesehen werden, wobei unter "breitbandig" verstanden werden soll, daß das abgestrahlte Spektrum sich mindestens über alle zur weiteren Analyse benötigten Wellenlängen erstreckt.

## Patentansprüche

1. Vorrichtung zur Spektralmessung von Objekten mit einer das Objekt bestrahlenden Strahlungsquelle mit einem breiten Spektrum, einer Anordnung zum Weiterleiten der vom Objekt reflektierten oder transmittierten Strahlung, die eine Linse (4) und einen Lichtleiter (5) umfaßt, einer mehrere Filter aufweisende Filteranordnung zur spektralen Zerlegung der Strahlung in unterschiedliche Wellenlängenbereiche und einer mehrere Empfänger aufweisende Empfängeranordnung, wobei die Anordnung zum Weiterleiten die Strahlung derart weiterleitet, daß jedem Filter und Empfänger Strahlung aus demselben Raumgebiet angeboten wird,
**dadurch gekennzeichnet,**
**daß** die Linse (4) und der Lichtleiter (5) der Anordnung zum Weiterleiten derart angeordnet sind, daß die vom Objekt (3) reflektierte oder transmittierte Strahlung über die Linse (4) in unscharfer Abbildung in den Lichtleiter (5) eingekoppelt wird, der zusätzlich die aus verschiedenen Raumwinkeln eingestrahlte Strahlung durchmischt und daß dem Lichtleiter (5) unter Zwischenschaltung einer Streuscheibe (11) oder eines diffraktiven optischen Bauelementes ein strahlungsführender Block nachgeschaltet ist, der sich verzweigt, wobei am Ende der Verzweigungsarme jeweils die Filter der Filteranordnung und die Empfänger der Empfängeranordnung angeordnet sind.

2. Vorrichtung nach Anspruch 1, **dadurch gekennzeichnet, daß** der Lichtleiter (5) gebogen oder verdrillt ist und/oder in seiner Länge so gewählt wird, daß die aus ihr austretende Strahlung eine möglichst homogene Verteilung der Strahlungsintensität aufweist.

3. Vorrichtung nach einem der Ansprüche 1 bis 2, **dadurch gekennzeichnet, daß** die Streuscheibe angerauht ist, wobei die mittlere Rauhigkeit größer als die untersuchte Wellenlänge ist.

4. Vorrichtung nach einem der Ansprüche 1 bis 3, **dadurch gekennzeichnet, daß** die Filter als Interferenzfilter (7) ausgebildet sind.

5. Vorrichtung nach einem der Ansprüche 1 bis 4, **dadurch gekennzeichnet, daß** das diffraktive optische Bauelement als Transmissionsgitter ausgebildet ist.

6. Vorrichtung nach einem der Ansprüche 1 bis 5, **dadurch gekennzeichnet, daß** die Interferenzfilter (7) auf ein Fenster einer mehrere Detektoren aufweisenden Photodiode (9) oder direkt auf diese aufgebracht sind.

7. Vorrichtung nach einem der Ansprüche 1 bis 6, **dadurch gekennzeichnet, daß** die jeweiligen Filter und/oder die Detektoren auf die Verzweigungsenden des strahlungsführenden Blocks aufgedampft und/oder aufgeklebt sind.

8. Vorrichtung nach einem der Ansprüche 1 bis 7, **dadurch gekennzeichnet, daß** die Streuscheibe oder das diffraktive optische Bauelement fest mit dem strahlungsführenden Block verbunden sind und/oder an der Stirnfläche desselben ausgebildet sind.

9. Vorrichtung nach einem der Ansprüche 1 bis 8, **dadurch gekennzeichnet, daß** der strahlungsführende Block als Spritzgußteil ausgebildet ist.

## Claims

1. Device for spectral measuring of objects by means of a radiation source which radiates the object with a broad spectrum, an arrangement for passing on radiation reflected or transmitted by objects, including a lens (4) and a light conductor (5), a filter arrangement comprising a plurality of filters for spectral dispersal of radiation into different wavelength ranges and a receiver arrangement comprising a plurality of receivers, and the arrangement for passing on transmits radiation in such a manner that each filter and receiver is offered radiation from the same spatial area, **characterised in that** the lens (4) and the light conductor (5) of the arrangement for passing on are arranged in such a manner that radiation reflected or transmitted by the object (3) is via the lens (4) fed in an unfocussed state into the light conductor (5) which additionally mixes radiation from different spatial angles, and downstream of the light conductor (5) is connected, with a scatter disc (11) or a diffractive optical assembly element thereinbetween, a radiation ducting block which branches off, and at the end of the branch arms are arrangement respective filters of the filter arrangement and the receivers of the receiver arrangement.

2. Device according to Claim 1, **characterised in that** the light conductor (5) is bent or drilled and/or chosen in its length so that therefrom emitted radiation is of best possible homogenous distribution of radiation intensity.

3. Device according to one of Claims 1 to 2, **characterised in that** the dispersal disc is roughened, and the mean roughness is greater than the examined wavelength.

4. Device according to one of Claims 1 to 3, **characterised in that** the filters are designed as interference filters (7).

5. Device according to one of Claims 1 to 4, **characterised in that** the diffractive optical assembly element is designed as a transmission grid.

6. Device according to one of Claims 1 to 5, **characterised in that** the interference filters (7) are placed on a window of a photo diode (9) having a plurality of detectors or directly thereonto.

7. Device according to one of Claims 1 to 6, **characterised in that** the respective filters and/or the detectors or vaporised and/or glued onto the branch ends of the radiation ducting block.

8. Device according to one of Claims 1 to 7, **characterised in that** the scatter disc or the diffractive optical assembly element are firmly connected to the radiation ducting block and/or are arranged at its end surface.

9. Device according to one of Claims 1 to 8, **characterised in that** the radiation ducting block is designed as an injection moulded part.

## Revendications

1. Dispositif destiné à la mesure spectrale d'objets présentant une source de rayonnement irradiant l'objet et présentant un large spectre, un dispositif permettant de transmettre le rayonnement réfléchi ou transmis par l'objet, qui comprend une lentille (4) et une fibre optique (5), un dispositif de filtrage comportant plusieurs filtres et destiné à la décomposition spectrale du rayonnement en différentes gammes de longueur d'onde, et un dispositif de réception comportant plusieurs récepteurs, dans lequel le dispositif de transmission transmet le rayonnement de façon telle qu'un rayonnement d'une même région spatiale est offert à chaque filtre et récepteur, **caractérisé en ce que** la lentille (4) et la fibre optique (5) du dispositif permettant la transmission sont disposées de façon telle que le rayonnement réfléchi ou transmis par l'objet (3) est couplé en entrée selon une image floue via la lentille (4) dans la fibre optique (5), qui en outre mélange le rayonnement émis depuis différents angles spatiaux, et **en ce qu'**après la fibre optique (5) et par intercalation d'un verre diffusant (11) ou d'un élément optique de diffraction est intercalé un bloc de guidage du rayonnement, qui se ramifie, les filtres du dispositif de filtrage et les récepteurs du dispositif de réception étant respectivement disposés à l'extrémité des bras de ramification.

2. Dispositif selon la revendication 1, **caractérisé en ce que** la fibre optique (5) est courbée ou torsadée et/ou sa longueur sélectionnée de façon telle que son rayonnement en sortie présente une répartition la plus homogène possible de l'intensité de rayonnement.

3. Dispositif selon l'une des revendications 1 à 2, **caractérisé en ce que** le verre diffusant est rendu rugueux, la rugosité moyenne étant supérieure à la longueur d'onde examinée.

4. Dispositif selon l'une des revendications 1 à 3, **caractérisé en ce que** les filtres sont conçus en tant que filtres interférentiels (7).

5. Dispositif selon l'une des revendications 1 à 4, **caractérisé en ce que** l'élément optique de diffraction est conçu en tant que grille de transmission.

6. Dispositif selon l'une des revendications 1 à 5, **caractérisé en ce que** les filtres interférentiels (7) sont appliqués sur une fenêtre d'une photodiode (9) présentant plusieurs détecteurs ou directement sur ceux-ci.

7. Dispositif selon l'une des revendications 1 à 6, **caractérisé en ce que** les filtres et/ou détecteurs respectifs sont métallisés et/ou collés sur les extrémités de ramification du bloc de guidage de rayonnement.

8. Dispositif selon l'une des revendications 1 à 7, **caractérisé en ce que** le verre diffusant ou l'élément optique de diffraction sont reliés de façon fixe au bloc de guidage de rayonnement et/ou conçus au niveau de la surface avant de celui-ci.

9. Dispositif selon l'une des revendications 1 à 8, **caractérisé en ce que** le bloc de guidage de rayonnement est conçu en tant que pièce moulée par injection.
